Europäisches Patentamt

European Patent Office

Office européen des brevets

(19)

(11) Publication number: **0 400 930**
**A2**

## (12) EUROPEAN PATENT APPLICATION

(21) Application number: **90305751.1**

(51) Int. Cl.5: **G06F 11/16**

(22) Date of filing: **25.05.90**

(30) Priority: **02.06.89 US 360682**

(43) Date of publication of application:
**05.12.90 Bulletin 90/49**

(84) Designated Contracting States:
**AT BE CH DE FR GB IT LI LU NL SE**

(71) Applicant: **MOTOROLA INC.**
**1303 East Algonquin Road**
**Schaumburg Illinois 60196(US)**

(72) Inventor: **Goldberg, Steven Jeffrey**

**11787 NW 26th Street**
**Coral Springs, Florida 33065(US)**
Inventor: **Lobel, Gary Steven**
**9589 Calliandra Drive**
**Boynton Beach, Florida 33436(US)**

(74) Representative: **Dunlop, Hugh Christopher et al**
**Motorola European Intellectual Property Operations Jays Close Viables Industrial Estate**
**Basingstoke, Hampshire RG22 4PD(GB)**

(54) **Realtime redundant operating system.**

(57) In an electronic system of the type wherein a plurality of boards, including a common memory, plug into a backplane which provides data and address buses for common use, realtime redundancy is produced by providing a second electronic system and coupling the two systems together so that each memory stores basically the same information and the buses operate substantially in common. The two systems are controlled so that one operates in a prime mode and the other operates in a redundant mode and the modes of operation are switched when the one operating in the prime mode has a failure.

*FIG.1*

EP 0 400 930 A2

## REALTIME REDUNDANT OPERATING SYSTEM

The present invention pertains to a redundant electronic system and more specifically to a realtime redundant operating electronic system of the type utilizing a common backplane. The present invention is especially useful in electronic paging systems and the like.

Background of the Invention

Redundancy is often classified according to the degree of coupling between the components. The methodology of this coupling greatly affects the degree to which many desirable redundancy qualities are met. Loose coupled systems normally have the capability for running offline diagnostics, not interfering with online hardware, and a minimum built in overhead for nonredundant versions. Tightly coupled systems backup data in realtime, have no program overhead for redundancy, and can monitor the online system closely. A brief comparison of benefits for the two prior art systems is listed below.

|  | tightly coupled | loosely coupled |
|---|---|---|
| Data Backup | realtime | delayed |
| Processor Overhead | small/none | high |
| Cost to Nonredundant | high | small |
| Increased Faults | medium | low |
| Deadly Faults | high | low |
| Online Monitor | good | poor |
| Offline Testing | poor-good | excellent |

Loosely coupled redundancy is typified by connecting two chassis by a communications link. The higher speed the link the closer the redundant system will be able to track the prime unit. Disadvantages of this type of redundant system include high communications overhead and restrictions on programming, and a large loss of data during the switch over process. There are well known variations on this form such as load sharing.

Tightly coupled redundancy is usually found with a commonly shared memory. The redundant unit can therefore access the common memory if the prime unit can no longer operate. More sophisticated versions dualport the memory. This allows a means for the offline unit to perform monitor and test operations. The biggest problem with this form of redundancy is the inherent weak point of a single memory board.

Summary of the Invention

It is an object of the present invention to provide new and improved apparatus and a method of providing realtime redundant operation in an electronic system.

It is a further object of the present invention to provide a realtime redundant electronic system which includes most of the advantages of both a loosely coupled system and a tightly coupled system.

It is a further object of the present invention to provide a new and improved electronic paging system having realtime redundant operation.

These and other objects are realized in an electronic system including a first backplane including a plurality of board receiving slots connected by a data and address bus, a first plurality of electronic boards, including a first redundancy board and a memory, engaged in the slots of the first backplane, a second backplane including a plurality of board receiving slots connected by a data and address bus, a second plurality of electronic boards, including a second redundancy board and a memory, engaged in the slots of the second backplane, coupling means connected to said first and second redundancy boards for coupling the data and address buses of the first and second backplanes through the first and second redundancy boards and for coupling control signals to each of the first and second redundancy boards, and the first and second redundancy boards cooperating to control one of the backplanes and the engaged electronic boards to operate in a prime mode and the other backplane and engaged electronic boards to operate in a redundancy mode and to switch the modes in response to either a user command or a fault occurrence in the one backplane and engaged electronic boards operating in the prime mode.

The above objects are further realized in a method of providing realtime redundant operation in a first electronic system having time shared data and address buses and a memory for data and operations, which method includes the steps of providing a second electronics system having time shared data and address buses and a memory for data and operations, coupling the first and second electronics systems together so that the data and address buses carry the same information, controlling the first and second electronic systems so that one operates in a prime mode and the other operates in a redundant mode and so that both memories receive and store the same information, and switching the mode of operation of the first and second electronic systems when a fault occurs in the electronic system operating in the prime mode.

Brief Description of the Drawings

Referring to the drawings:

FIG. 1 is a simplified block diagram of an electronic paging system with realtime redundant operation embodying the present invention;

FIG. 2 illustrates a chassis configuration for the electronic paging system of FIG.1; and

FIGS. 3A, 3B, 3C and 3D are interconnected portions of a schematic drawing of a redundancy board from FIG.1.

Description of the Preferred Embodiment

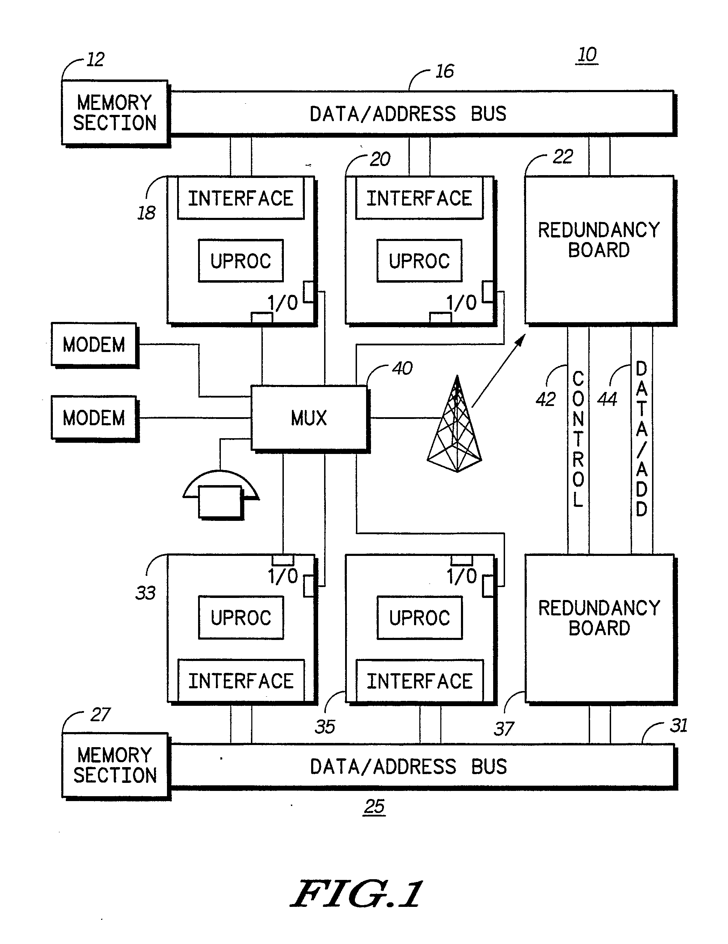

Referring to FIG. 1, a simplified block diagram of an electronic paging system with realtime redundant operation is illustrated. The paging system includes a first electronic system 10 which has an advanced memory section 12 that may in the simplest configuration include clock and sync circuits connected by means of a data and address bus 16 to two I/O boards 18 and 20 and to a redundancy board 22, and a second electronic system 25 which has an advanced memory section 27 that may in the simplest configuration include clock and sync circuits connected by means of a data and address bus 31 to two I/O boards 33 and 35 and to a redundancy board 37. In this specific embodiment, electronic systems 10 and 25 are each basically the same, except for redundancy boards 22 and 37, as the paging system disclosed in copending United States patent application entitled "Paging Controller Having a Multiplex Bus Arrangement", filed July 28, 1988 and bearing serial number 225,423. The invention is especially adaptable to this paging system but is not limited to paging systems or to this particular type of paging system. Further, while electronic systems 10 and 25 are illustrated and described as identical it will be understood by those skilled in the art that an electronic system that is to be used only as a redundant system need not have all of the I/O boards etc. included in the primary electronic system. The advantage of having identical components is that there are less different components to manufacture and store and the advantage of similar electronic systems is that either system can be used for the prime mode at any time.

Each of the I/O boards 18, 20, 33 and 35 is constructed with a microprocessor and I/O ports which may be connected through external lines, to telephones, modems, transmitters, etc. In this embodiment, the external lines are connected through a multiplexor 40 to the appropriate I/O boards so that, in general, the external lines will always be operatively connected to the I/O boards of the electronic system which is operating in the prime mode. Multiplexor 40 is connected to redundancy boards 22 and 37 by means of control lines 42 extending therebetween. Also extending between redundancy boards 22 and 37 are lines 44 coupling data and address bus 16 to data and address bus 31. As will become apparent presently, either electronic system 10 or 25 can operate in the prime mode and upon initially starting the systems either the operator can select one of systems 10 or 25 as the prime or a natural selection can occur. Further, at any time during the operation if a fault is detected in the system operating in the prime mode, redundancy boards 22 and 37 can switch modes so that the other system operates in the prime mode. If one of redundancy boards 22 and 37 is not present, not properly plugged in, or not powered for some reason, electronic systems 10 and 25 will operate in isolation from each other as stand-alone systems. Only ground potentials are physically connected between electronic systems 10 and 25 and all other supplies are isolated so that there are no adverse effects on devices due to one redundancy board being powered, while the other is not. In many instances, it may not be necessary to completely duplicate all of the components of electronic system 10 in electronic system 25 and, while the electronic systems may be basically similar (memory, bus, redundancy board, etc.) components such as I/O boards are not required continuously.

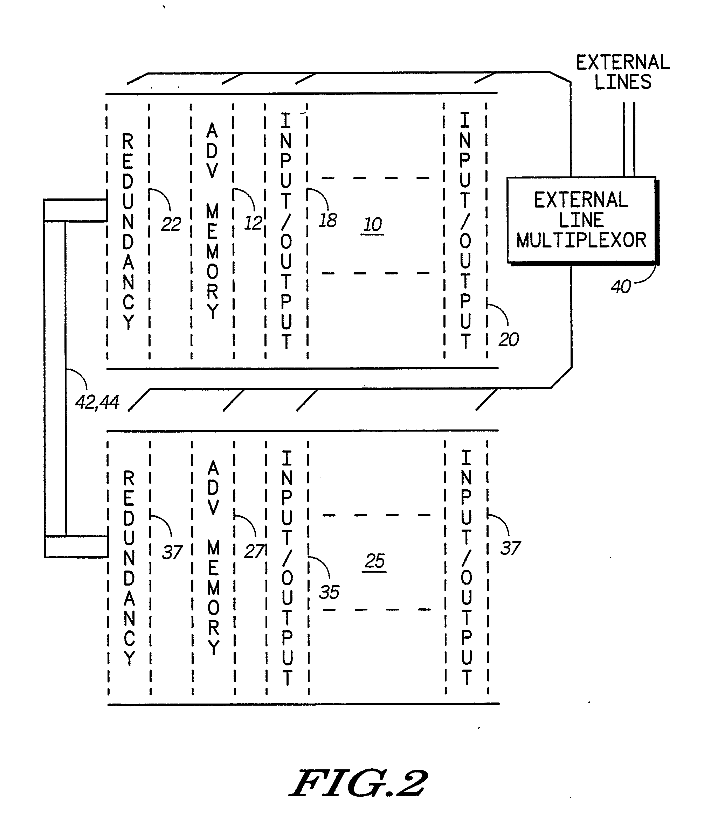

FIG. 2 is a drawing of a chassis configuration for the paging system illustrated in FIG.1. Each of the electronic systems 10 and 25 includes a backplane having a plurality of slots defined therein for receiving electronic boards in physical and electrical engagement therein. The slots are interconnected by bus 16 or 31 and each of the various described components is constructed on an electronic board which is designed to plug into or otherwise be engaged in the slots of the backplanes. In general, any of the boards can be engaged in any of the slots. In this embodiment, control lines 42 and data and address lines 44 connecting the redundancy boards 22 and 37 are external flat cables. Redundancy boards 22 and 37 are substantially identical but their operation is differentiated during power up as a function of programming control.

Briefly, the operation of electronic system 10 is as follows. Each electronic board 18, 20, etc. takes turns in having access and control over data and address bus 16. When an electronic board has supervisory control over data and address bus 16, it is referred to as a master of data and address bus 16. Associated with each electronic board is an address being numbered in sequence to define a succession order and each electronic board takes turns in being master of data and address bus 16 in accordance with its sequence in the succession order. When an electronic board is master of data and address bus 16, it may exchange data with memory section 12. When an electronic board is not a master, it is not permitted access or control over data and address bus 16. However, it is important to note that when an electronic board is not a master it may continue to receive information through its respective input ports, and to output information through its respective output ports.

Memory section 12 is utilized to store information received from an electronic board. Access by a master is accomplished by sensing the synchronization signal and then determining the time period that the master has access to data and address bus 16, depending upon the predetermined address which has been assigned to the electronic board.

The access of memory 12 by individual electronic boards is performed on a time division multiplex basis. Each electronic board is assigned a specific time slot of a frame to access memory 12. A frame is equivalent to the total time of all time slots. The total number of time slots is equivalent to the number of electronic boards that can be connected to data and address bus 16. It is important to note that each electronic board becomes master of data and address bus 16 during its time slot and even if there are less electronic boards than time slots, each electronic board only accesses data and address bus 16 during its time slot. That is, if vacant time slots are available, these time slots are not used by any of the electronic boards present in the system. This allows additional electronic boards to be connected to data and address bus 16 without interfering with the operation of electronic modules already connected. A complete description of the contents and operation of electronic system 10 (and 25 in this embodiment) is contained in the above described copending application No.225,423 and any portions thereof which may be deemed to be required are incorporated herein by reference.

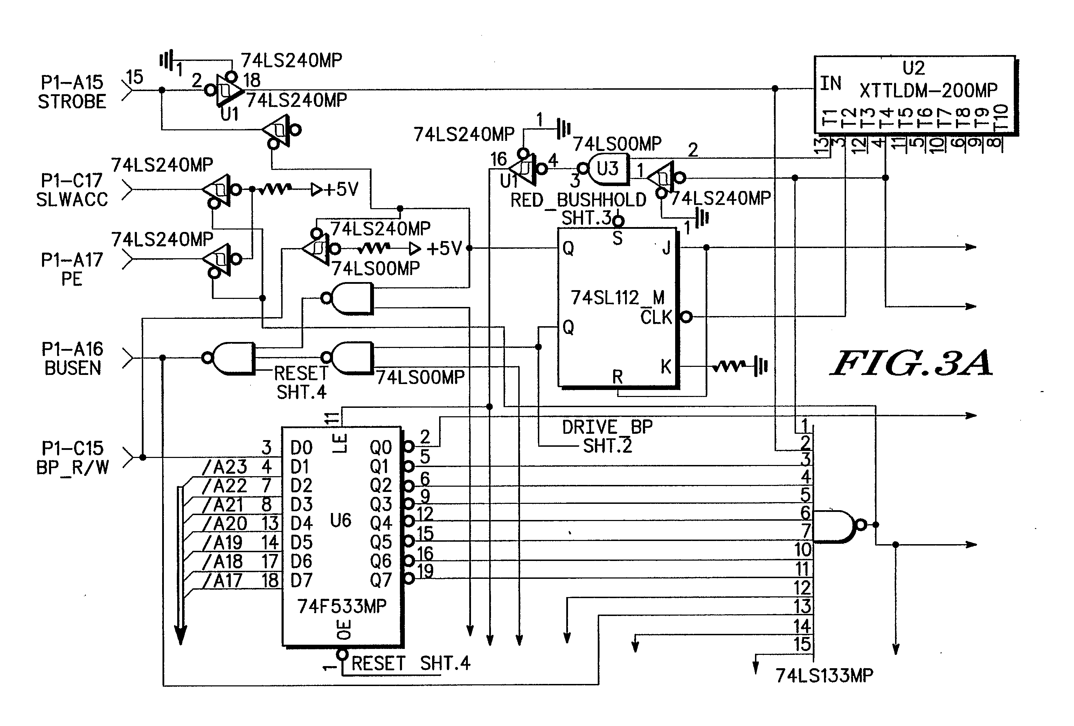

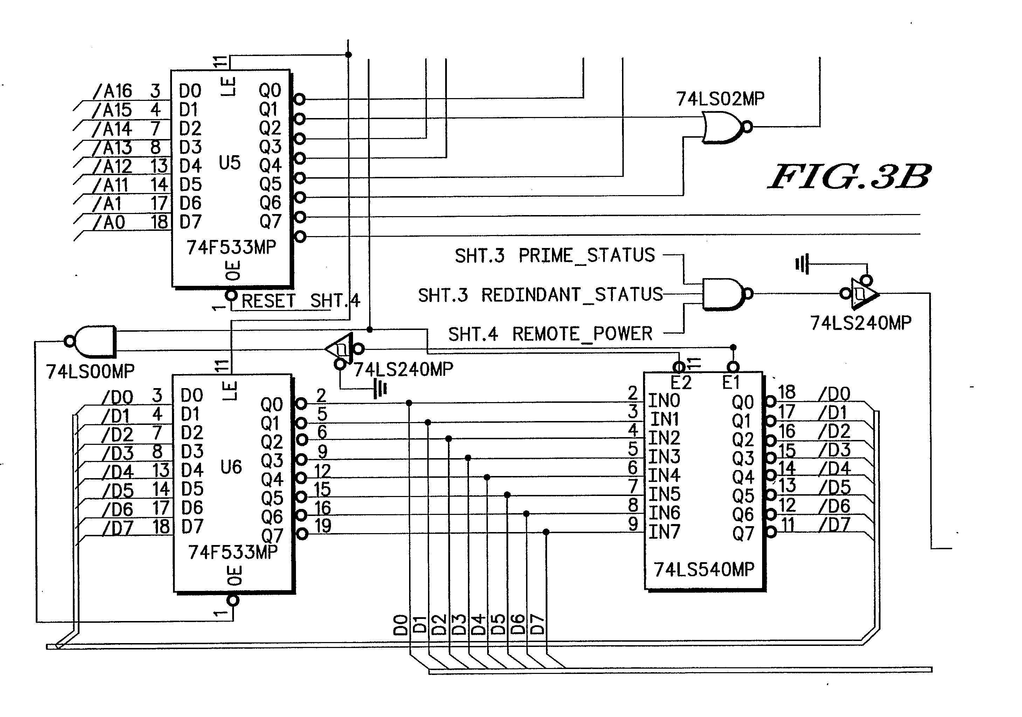

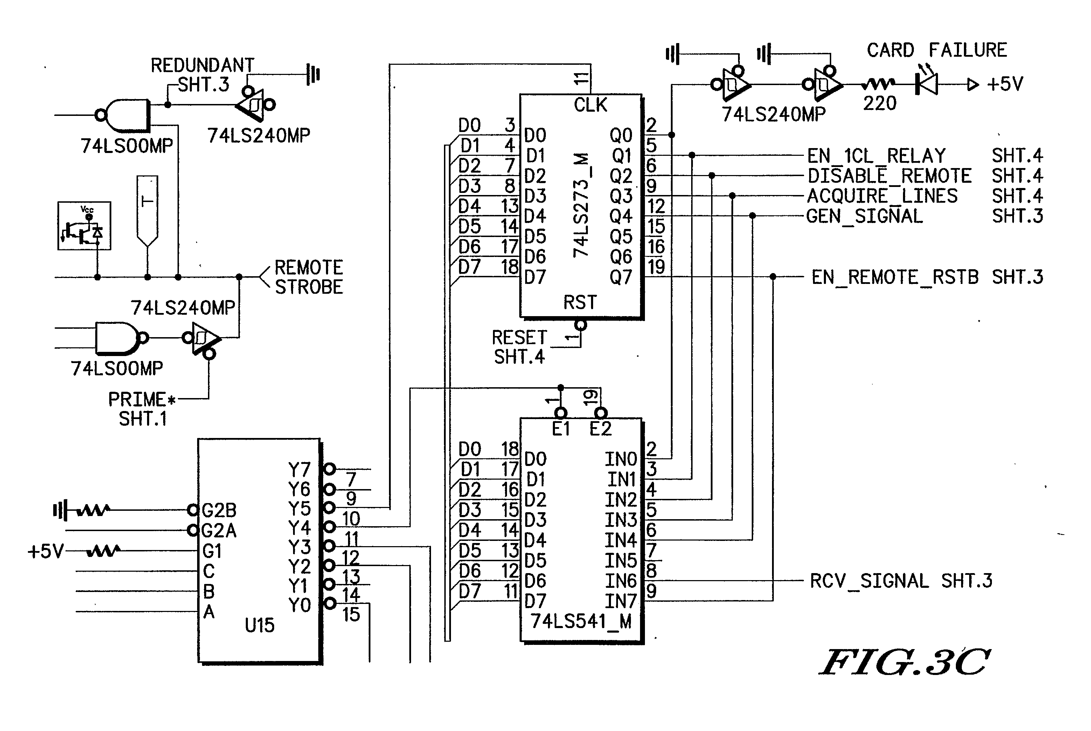

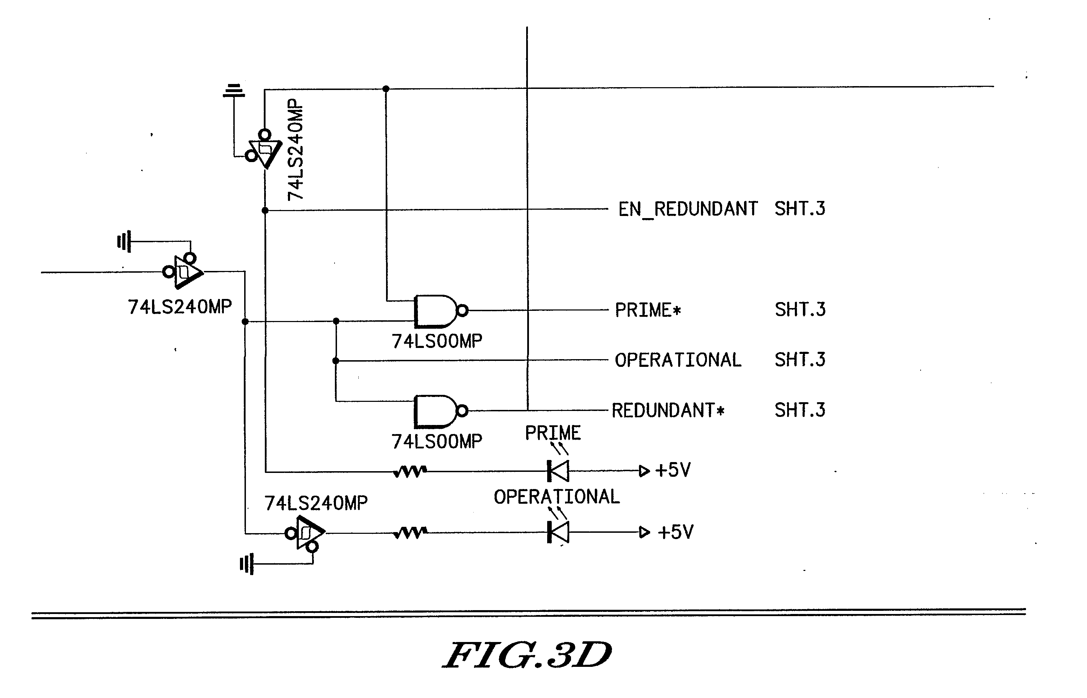

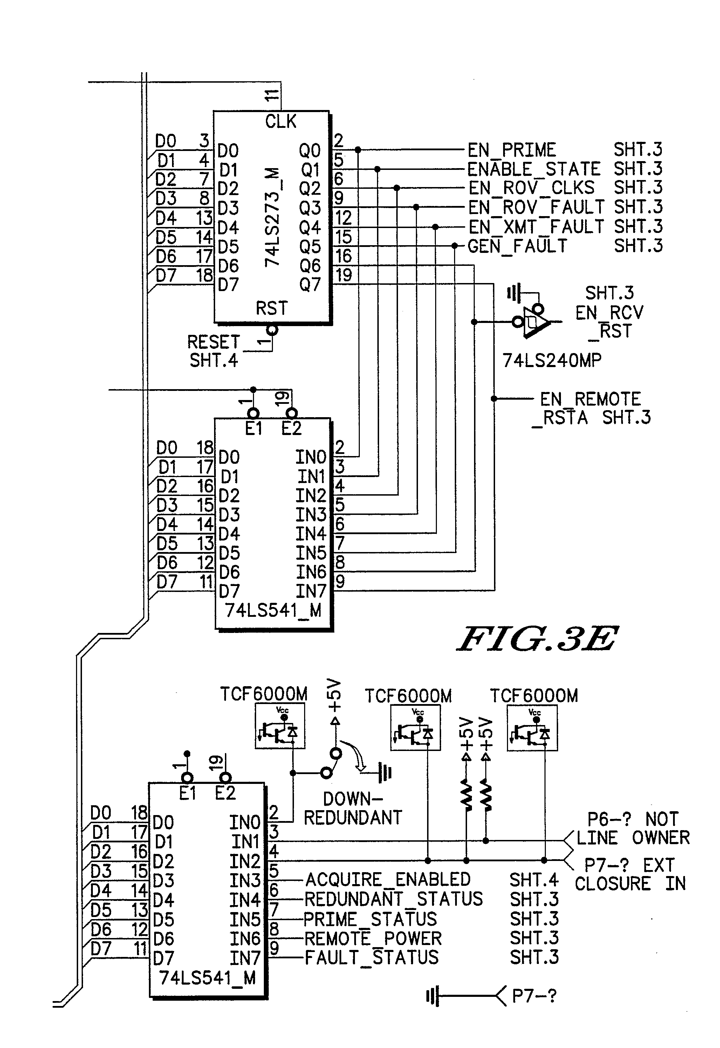

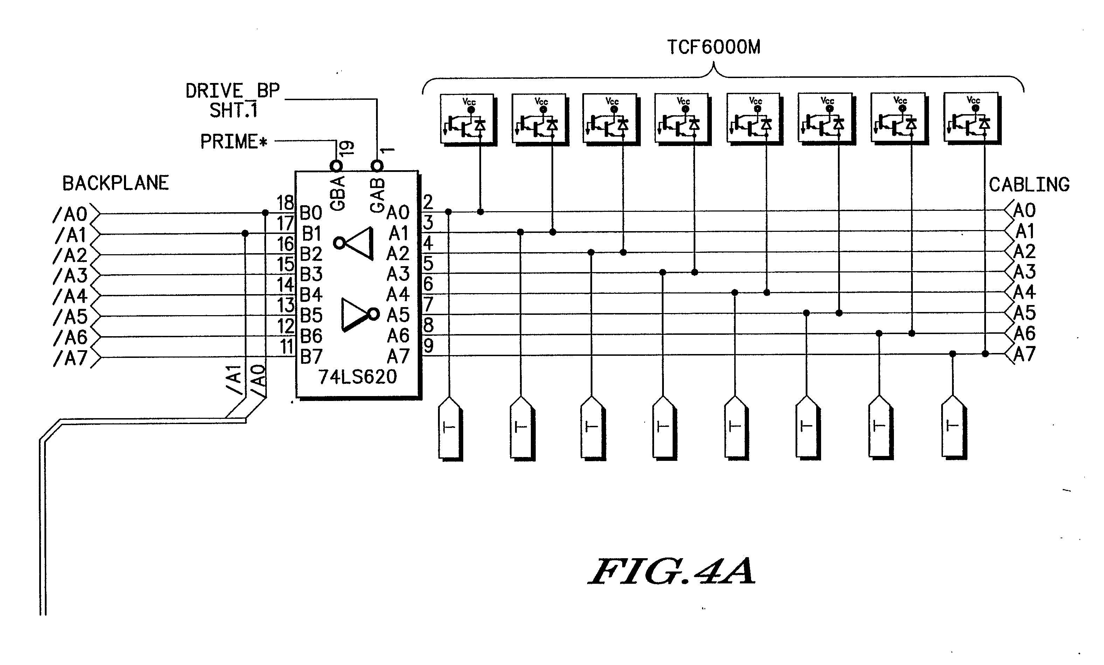

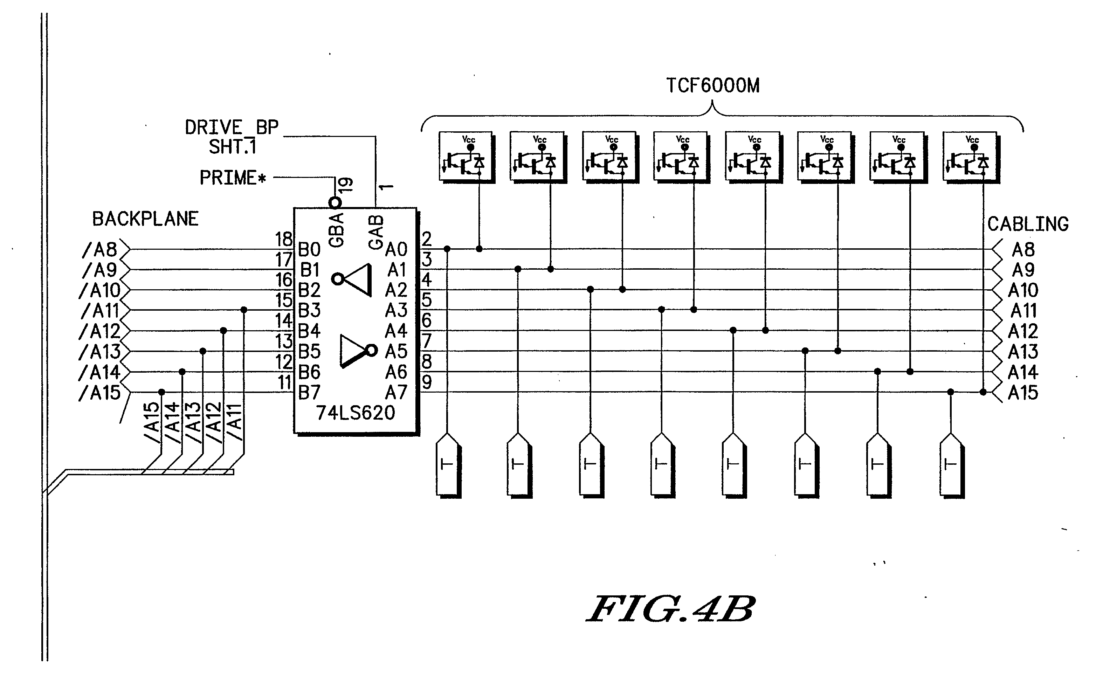

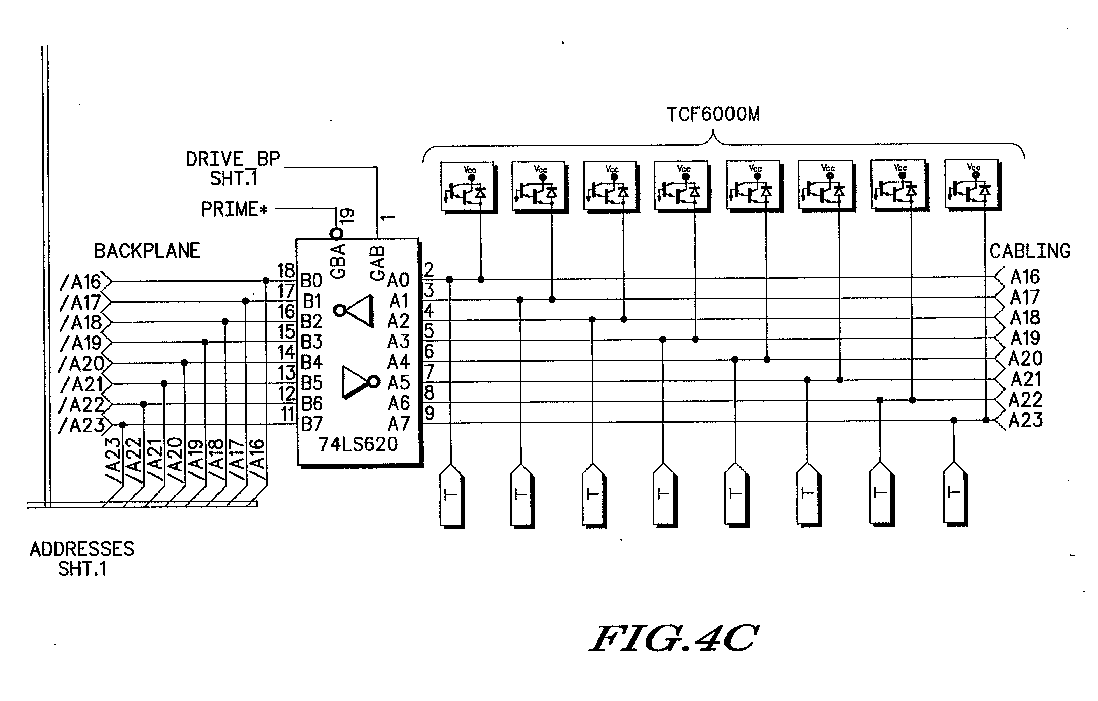

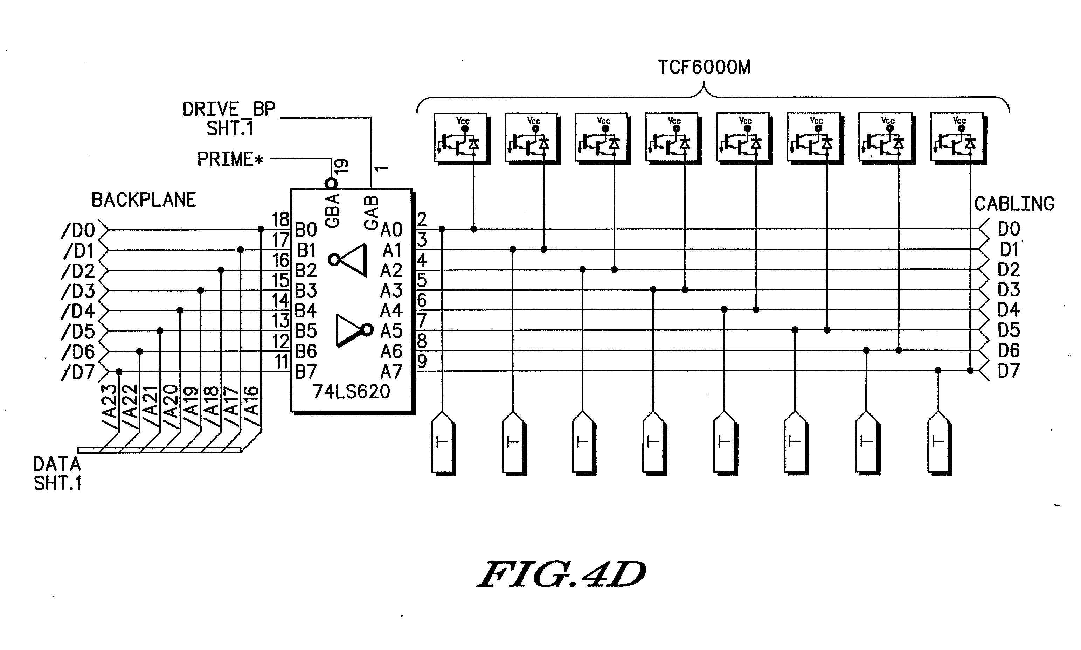

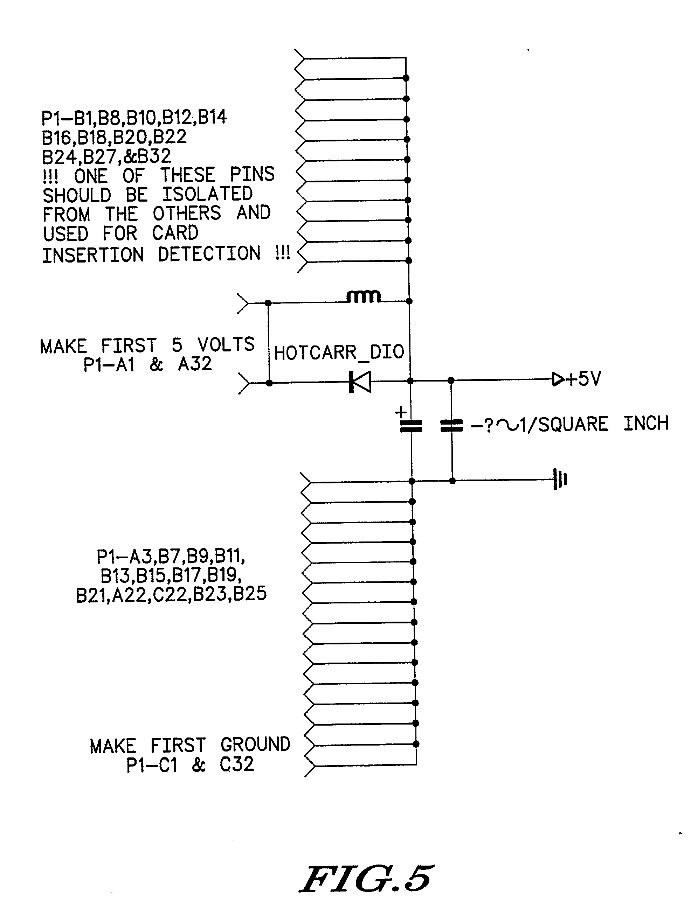

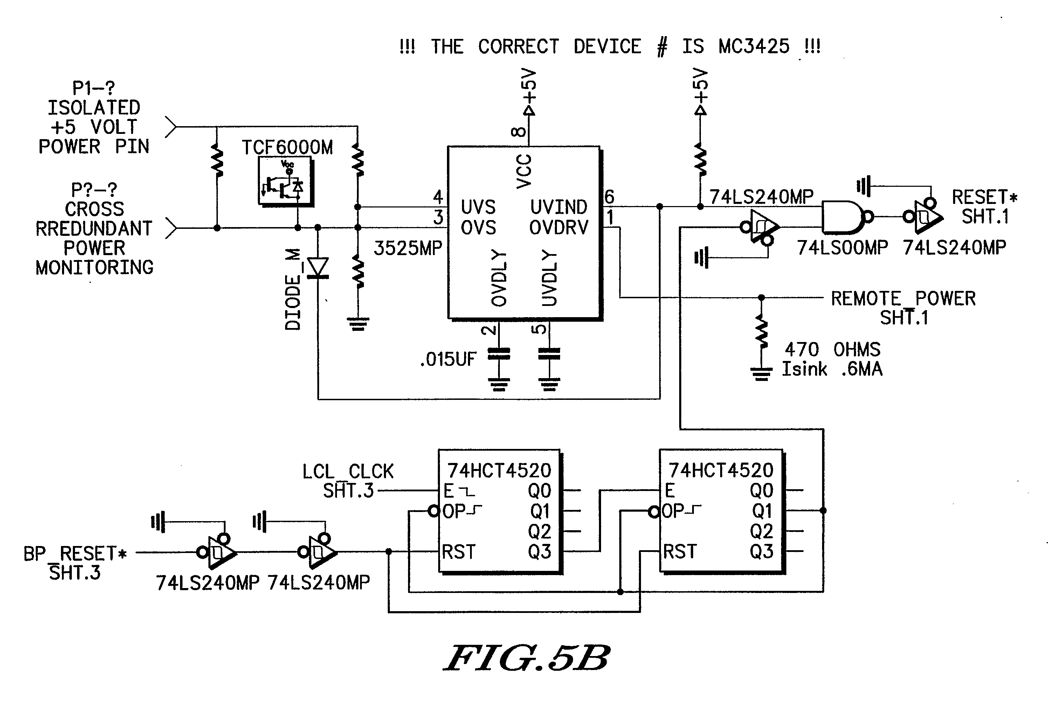

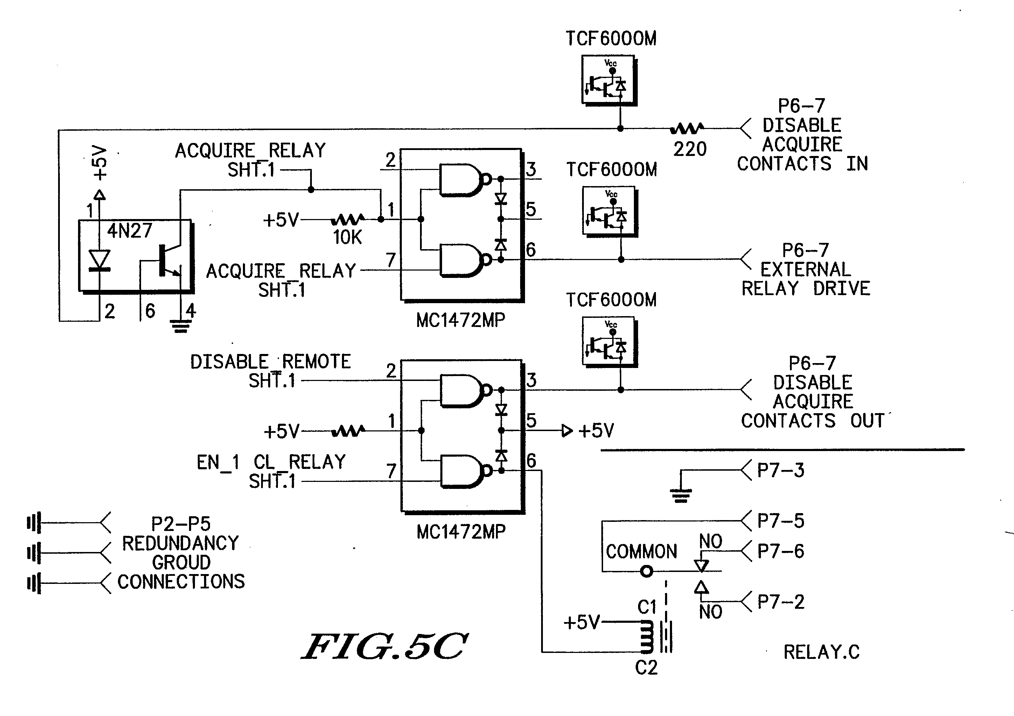

FIGS. 3A, 3B, 3C and 3D illustrate various interconnected components of redundancy board 22. Referring to FIG. 3B, it can be seen that twenty four address lines A0 through A23, and eight data lines D0 through D7, designated lines 44 in FIG. 1 are connected to four buffer amplifiers 46 which buffer amplifiers connect the data and address lines to data and address bus 16 of electronic system 10. Buffer amplifiers 46 are constructed to allow the flow of information either into or out of electronic system 10, which decision is controlled by a PRIME* and a DRIVE BP signal (to be explained presently) from redundancy board 22. Address and data on the prime backplane are always immediately driven to the redundant card. They are enabled to the redundant backplane for the duration of a STROBE* initiated latch state. Redundancy buffer amplifiers 46 minimize the load factors seen by any electronic board to those of the associated backplane, so that each electronic system 10 and 25 appears to be operating in isolation. Each of the data and address lines includes a circuit for maintaining the correct signal level thereon as well as a proper termination when the external lines 44 are not connected or the redundancy board at the other end of the lines is not powered. These specific circuits will not be discussed further herein since the operation thereof will be apparent to those skilled in the art. The address and data lines are also connected to the circuitry of FIG.3A, which circuitry includes the redundancy control features. Most of these features will be described in terms of function, rather than circuitry, since the circuits could be constructed in a variety of forms and the present form will be apparent to those skilled in the art upon a description of the operation.

Redundancy board 22 has a switch 48 thereon which provides the operator with a choice of operation, i.e. the mode of operation upon initial power up. Switch 48 connects the positive power supply to a first input of a control and status register 49 if the operator wants redundancy board 22 to power up in the prime mode or it connects reference ground to the first input if the operator wants redundancy board 22 to power up in the redundant mode. Also, electronic board 22 has three light emitting diodes (LEDs) 50, 51 and 52. LED 50 is an operational LED which indicates that the pair of redundancy boards 22 and 37 are operating in

4

the prime/redundant mode. Both redundancy boards should either have LED 50 on or off during proper operation. Referring to FIG.3A, the anode of LED 50 is connected to a positive power supply and the cathode is connected through a pair of hysteresis amplifiers 54 and 55 to the output of a three input NAND gate 57. A first input of NAND gate 57 is connected to receive a PRIME STATUS signal from a hysteresis amplifier 58 (FIG.3C) the input of which is connected to a control line labelled PRIME ACTIVE. The PRIME ACTIVE control line is one of control lines 42 extending between redundancy boards 22 and 37 and is connected to the output of a two input NAND gate 59, which two inputs are connected to receive an EN PRIME (enable prime) and an ENABLE STATE signal from first and second outputs of a control register A 60 (FIG.3A). The second input of NAND gate 57 is connected to receive a REDUNDANT STATUS signal from a hysteresis amplifier 61 (FIG.3C), the input of which is connected to a control line labelled REDUNDANT ACTIVE. The REDUNDANT ACTIVE control line is one of control lines 42 extending between redundancy boards 22 and 37 and is connected to the output of a two input NAND gate 62, which two inputs are connected to receive the ENABLE STATE output signal from control register A 60 and an EN REDUNDANT signal from a hysteresis amplifier 65 (FIG.3A), the input of which is connected to the EN PRIME output of control register A 60. The third input of NAND gate 57 is connected to receive a REMOTE POWER signal from a power supply supervisory/over-under-voltage protection circuit 67 (FIG.3D). It should be noted that circuit 67 is connected into a remote power detection circuit designed to indicate that partner redundancy card 37 exists and is powered, and that power supplied to redundancy board 22 is at a predetermined level. Thus, an output signal from NAND gate 57 which enables redundancy board 22 operational and turns on LED 50, is available if both the PRIME STATUS and REDUNDANT STATUS signals are present and a proper level of power is being applied to redundancy board 22.

LED 51 indicates the prime mode of operation. If LED 51 is on, redundancy board 22 is configured to operate in the prime mode. Only one redundancy board can have LED 51 on during normal operation. The anode of LED 51 is connected to a positive power supply and the cathode is connected to the output of hysteresis amplifier 65.

LED 52 is a failure indicator which is under program control, whereas LEDs 50 and 51 are hardware driven. The anode of LED 52 is connected to a positive power supply and the cathode is connected through two hysteresis amplifiers 68 and 69 to a first output of a control register B 70. It should be noted that both control register A 60 and control register B 70 are illustrated in two interconnected parts, a first part of which has outputs connected to various components of redundancy board 22 and inputs connected to the data lines and a second part of which has outputs connected to the data lines and the inputs connected to the outputs of the first part. This provides for the flow of data in either direction through control registers A and B 60 and 70, respectively.

An input terminal 72 is connected to one of control lines 42 for receiving/sending a STROBE* signal from/to redundancy board 37. Another input terminal 73 is connected to one of control lines 42 for receiving/sending a BUSEN (bus enable) signal from/to redundancy board 37. The BUSEN signal indicates whether the electronic boards engaged in the backplane of electronic system 10 should respond to attempted bus accesses in the I/O address range. The operation of the BUSEN signal is dependant upon the state of a PRIME signal for each backplane, the address range of the access, and whether the access is a read or write operation. Read operations are always restricted to the backplane of origination. Memory range write operations on the prime backplane are always duplicated on the redundant backplane. Write operations to the I/O range are active on each bus according to the following:

    1) A17 through A23 set high, define the I/O range.

    2) A15 and A16 select the electronic board type.

    3) With an enabled redundancy board, A13 high causes a write to occur on the originating bus.

    4) With an enabled redundancy board, A14 high causes a write to occur on the other bus.

The I/O ranges with A14 = 0 and A13 = 0 produce a write to neither bus and are generally only useful for diagnostic purposes. As has been previously stated, when electronic systems 10 and 25 are operating in the isolation mode all activity is restricted to the backplane of origination. It should be noted that in the case of a backplane without a redundancy board, all ranges will access the originating backplane and a backplane with a redundancy board installed will restrict I/O range accesses whether or not the redundancy board is operational.

As stated above, write operations are always duplicated on the bus of the redundant electronic system while read operations are restricted to the originating backplane. Thus, only write operation control signals received from the other backplane are valid. The originating redundancy board generates a STROBE* signal to the other redundancy board only if the operation is a write. The receiving redundancy board asserts a write signal to its backplane when any STROBE* signal is received on terminal 72. A STROBE* which appears on the prime backplane is delayed by 80 nanoseconds and qualified by the read/write line of the prime backplane. If valid it is then driven to the redundant backplane. The STROBE* release edge is also delayed by 80 nanoseconds. This timing maintains the basic width of the STROBE* on the redundant side. For the received STROBE* to drive the redundant backplane, a BUS HOLD active state must be received from the prime side. The received STROBE* immediately asserts its signal on the backplane. In addition the read/write line is driven to the write state (STROBE* only supplied in write state) and received data and address are driven to the backplane. The enable of the drivers for these signals is latched by the reception of the active STROBE*. The backplane asserted STROBE* feeds to the address decode circuitry of the redundancy board. When the inactive edge of the STROBE* is received, the latched driver actively drives the backplane line inactive. The driver enable latch will be released 40 nanoseconds later.

Referring to FIG.3A, a received STROBE* signal is supplied through a hysteresis amplifier 75 to the input of an instruction storage device 76, such as a ROM or RAM. In response to the input signal, device 76 supplies a first output signal to one input of a two input NAND gate 78 and removes a signal from a second output which, through a hysteresis amplifier 79, supplies a signal to the second input of NAND gate 78. NAND gate 78 supplies an output signal through a hysteresis amplifier 81 to enable inputs of three registers 83, 84 and 85, which are connected to receive specific ones of the address and all of the data signals from bus 16, or the backplane, of system 10.

When a STROBE* signal is not supplied to device 76, a signal is available at the second output of device 76, which signal is supplied to one input of a two input NAND gate 87, the output of which is supplied through a hysteresis amplifier 88 to a terminal 89 and through a second hysteresis amplifier 90 to terminal 72. The (output) of hysteresis amplifier 88 is controlled by a PRIME* signal, which is supplied by a two input NAND gate 92. The inputs of NAND gate 92 are connected to the output of NAND gate 57 through hysteresis amplifier 55, and to the EN PRIME output of control register A 60. When the PRIME* signal is present, redundancy board 22 is operating in the prime mode and hysteresis amplifier 88 is activated. A second input signal to NAND gate 87, from control register 83, is provided when a write operation address is supplied to register 83 from the backplane of electronic system 10. Whenever the PRIME* signal is applied to activate hysteresis amplifier 88, a REMOTE STROBE signal is supplied at terminal 89. This signal is also supplied to one input of a two input NAND gate 94. The second input to NAND gate 94 is supplied through a hysteresis amplifier 93 from the output of a two input NAND gate 95, which signal is labelled REDUNDANT* and is used in several other places on redundancy board 22. The two inputs of NAND gate 95 are attached to the outputs of hysteresis amplifiers 55 and 65, respectively. It should be noted that amplifier 65 operates as an inverter for the EN PRIME signal from control register A 60 so that only one of NAND gates 92 and 95 are supplying an output signal, PRIME* or REDUNDANT* respectively, at any one time. The output of NAND gate 94 is connected to a reset and a C input of a bistable device 97. A set input for bistable device 97 is connected to receive a RED BUSHOLD signal from the output of a hysteresis amplifier 98 (see FIG.3C). A free running oscillator 100 supplies clock signals to a first divider 101 and to a second divider 102. Divider 101, in turn, supplies the redundancy bushold signals used to set bistable device 97. A third signal from device 76 is applied as a clock input to bistable device 97 and causes the outputs thereof to change states.

A Q output from bistable device 97 is supplied to an activation input of hysteresis amplifier 90, to an activation input of another hysteresis amplifier 105 and to one input of a two input NAND gate 107. When hysteresis amplifier 90 is activated and a signal is applied to the input, a STROBE* signal is supplied as an output at terminal 72. The input of hysteresis amplifier 105 is connected to the positive power supply so that activation of amplifier 105 produces an output signal BP R/W at a terminal 109. A second input of NAND gate 107 is connected to an output of register 84, which is activated by certain predetermined addresses being applied to the input thereof. The output of NAND gate 107 is supplied as a first input to a three input NAND gate 110. A second input of NAND gate 110 is supplied by a two input NAND gate 112, one input of which is received from an output of register 84 and the other input of which is supplied by the Q output of bistable device 97. The Q output is labelled DRIVE BP and is also supplied to control the direction of signals through buffer amplifiers 46, as previously explained. A third input of NAND gate 110 is a RESET signal and when all input signals are present, a BUSEN (bus enable) signal is generated and supplied to terminal 73.

The RESET signal is supplied through a hysteresis amplifier 113 by a two input NAND gate 114 (see FIG. 3D). One input to NAND gate 114 is a low voltage indication supplied by circuit 67 and the other input is supplied as an output of a two stage divider circuit 116. Divider circuit 116 is clocked by signals from oscillator 100 (FIG. 3C) and a reset signal is supplied through two hysteresis amplifiers 117. The signal supplied to amplifiers 117 is labelled BP RESET and is supplied by a two input NAND gate 120 (see FIG. 3C). A first input of NAND gate 120 is connected to receive an EN RCV RST signal from control register A 60, through a hysteresis amplifier 121 (see FIG. 3A) and a second input is connected to a terminal labelled REMOTE RESET, which is coupled to electronic system 37 by one of control lines 42. A REMOTE RESET signal is supplied to the terminal from redundancy board 22 by a two terminal NAND gate 125, one input of which is connected to an output EN REMOTE RSTA of control register A 60, and the other input of which is connected to an output signal EN REMOTE RSTB of control register B 70.

An output terminal 130 provides an output signal PE (parity error) which only has meaning during a read operation and for parity augmented data. Data is never read between redundancy boards 22 and 37 and there is no parity augmented data on either of the redundancy boards. When the address space of redundancy board 22 is read, redundancy parity error is always negated. The PE signal is generated by a hysteresis amplifier 133, the input of which is connected to the positive power supply. Amplifier 133 is activated to supply an output signal (PE) by an output signal from a thirteen input NAND gate 135. In a similar fashion, an output terminal 131 is connected to receive an SLWACC (slow access) signal from a hysteresis amplifier 132, the input of which is connected to the positive power supply. Amplifier 132 is activated by the output signal from NAND gate 135. Devices being accessed on both backplanes will generally be of identical type. Speed is therefore determined by the prime backplane. Since all redundancy board address space accesses are fast, slow access is always negated during a read operation.

A first input to NAND gate 135 is supplied by the second output of device 76. A second input to NAND gate 135 is the same signal supplied to the input of device 76. The next seven inputs to NAND gate 135 are received from outputs of register 83. The next input is received from an output of register 84. The next input is supplied by NAND gate 110. The next input is supplied by an output of register 84. The final input is received from a two input NOR gate 138, the inputs of which are connected to outputs of register 84. The output of NAND gate 135 is also connected to one input of a timing circuit 140, to a first enable input of a companion register to register 85 (renders the data lines two way), and through a hysteresis amplifier 142 to a first input of a two input NAND gate 143. Circuit 140 receives another input from the first output of register 83 and two other inputs from register 84, and supplies clock and enable signals to each of control registers A 60 and each of control registers B 70, respectively, and enable signals to control and status register 49. NAND gate 143 receives a second input from the first output of register 83 and supplies an enable signal to register 85.

The BUS HOLD signal is bidirectionally passed during redundancy operation. Two unidirectional control lines 42 connected between redundancy boards 22 and 37 are used. Which line is used in each direction is determined by which redundancy board is operating in the prime mode and which is operating in the redundancy mode. The occurrence of the BUS HOLD signal on both backplanes holds off access by a subsequent electronic board until the active electronic board can release the backplanes. The originating backplane redundancy board drives the active signal immediately to the remote board. Upon receipt of the signal the remote board blocks possible return of the signal to the source, and drives the signal on its backplane. The remote board must detect the signal released for a minimum of one microsecond before it will stop driving its backplane equivalent line active. When the signal is released its return to the originator is blocked for a period to allow for circuit delays which could otherwise cause a glitch to the originator.

Referring to FIG. 3C, the two unidirectional control lines are connected to terminals 145 and 147, respectively. Terminal 145 is a BUSHOLD* terminal and communicates the BUSHOLD* signal from the redundancy board operating in the redundant mode to the redundancy board operating in the prime mode. Terminal 147 communicates the BUSHOLD* signal from prime to redundant. Terminal 145 receives an output signal from a two input NAND gate 149 by way of a hysteresis amplifier 150. Amplifier 150 is activated by a REDUNDANT* signal from NAND gate 95 (FIG.3A). The output signal from NAND gate 149 is also supplied to terminal 147 through a hysteresis amplifier 152. Amplifier 152 is activated by a PRIME* signal from NAND gate 92 (FIG.3A). In addition, terminal 145 is connected through a hysteresis amplifier 153 to a reset terminal of divider 101 and terminal 147 is connected through a hysteresis amplifier 154 to the same reset terminal. Amplifier 153 is activated by the PRIME* signal and amplifier 154 is activated by the REDUNDANT* signal. One input of NAND gate 149 is connected to receive signals from an output of divider 101 and the other input is connected through a hysteresis amplifier 155 to the bushold line of the backplane. The BUSHOLD* signal on the backplane line is generated by an active electronic board in the backplane. Similarly, an output signal from divider 101, supplied through amplifier 98, is applied to one input of a two input NAND gate 157, the other input of which is connected to receive the OPERATIONAL* signal from the output of amplifier 55 (FIG.3A). NAND gate 157 provides a BUSHOLD* signal to the bushold line of the backplane.

As previously explained, each electronic board in the backplane has a specific time slot during which it can request the use of the bus. While electronic boards may only assert BUS REQ (bus request) during their time slots, they may maintain the request beyond their time slot. This feature is included to allow bus access time sliding due to setup requirements. The BUS REQ signal is actively transferred only from the backplane operating in the prime mode to the backplane operating in the redundant mode. This allows the redundant backplane electronic boards to be notified that a higher priority request is being made from the prime backplane. Also, it prevents the lower priority redundant backplane from taking utilization away from the prime backplane. The redundant backplane must detect the BUS REQ* signal released for a minimum of one microsecond before it will stop driving its bus request backplane line active.

Referring to FIG. 3C, a terminal 160 connects the BUS REQ* signal by a control line 42 from the prime backplane to the redundant backplane. Terminal 160 is connected through a hysteresis amplifier 161 to the reset input of divider 102. An output of divider 102 is coupled through a hysteresis amplifier 162 to one input of a two input NAND gate 164. The second input of NAND gate 164 is connected to receive the REDUNDANT* signal from NAND gate 95 (FIG.3A). When properly activated, NAND gate 164 provides a BUS REQ* signal to the bus request line in the backplane of electronic system 10. Conversely, when a BUS REQ* signal appears on the bus request backplane line it is communicated to output terminal 160 by a hysteresis amplifier 165, which is activated by a PRIME* signal from NAND gate 92 (FIG. 3A).

FAULT* signals are bidirectionally passed during redundancy operation. Each signal type (prime or redundant) uses two unidirectional lines between redundancy boards 22 and 37. Which line is used in each direction is determined by which board is operating in the prime mode and which board is operating in the redundant mode. The FAULT* signal is also activated locally anytime the local redundancy board indicates that redundancy is not operational. One redundancy board can always read the state of the fault line from the other redundancy board through a redundancy register. The received signal can optionally be allowed to drive the backplane by a local enable bit. A fault indication can be transmitted by setting a bit. It can also be optionally tied logically to the local backplane fault line. These features are accomplished with the following apparatus.

Referring to FIG. 3C, a pair of terminals 170 and 171 are connected to a similar pair of terminals in redundancy board 37 by means of a pair of the control lines 42. Terminal 170 is connected through a hysteresis amplifier 172 to a first input of a two input NAND gate 173. Amplifier 172 is activated by a REDUNDANT* signal from NAND gate 95. The second input of NAND gate 173 is connected to receive an OPERATIONAL signal from amplifier 55. The output of NAND gate 173 is supplied to one input of a two input NAND gate 175 and to one input of control status register 49 (FIG.3A). The second input of NAND gate 175 is connected to receive an EN REC FAULT signal from control register A 60. The output of NAND gate 175 is supplied to the fault line of the backplane of electronic system 10. Similarly, terminal 171 is connected through a hysteresis amplifier 176, activated by a PRIME* signal from NAND gate 92, to the first input of NAND gate 173. Conversely, the fault line of electronic system 10 is connected to one input of a two input NOR gate 177, the other input of which is connected to receive an EN XMT FAULT signal from control register A 60. The output of NOR gate 177 is supplied to one input of a two input NOR gate 178, the other input of which is connected to receive a GEN FAULT signal from control register A 60. The output of NOR gate 178 is connected through a hysteresis amplifier 179 to terminal 171. Amplifier 179 is activated by a REDUNDANT* signal from NAND gate 95. The output of NOR gate 178 is also connected through a hysteresis amplifier 180 to terminal 170. Amplifier 180 is activated by a PRIME* signal from NAND gate 92.

A pair of signals, TDM CLOCK and TDM SYNC, are unidirectional from the prime to the redundant backplane. The driving of these clock signals to the redundant backplane is bit controlled and inactive after a reset. For proper redundancy operation, the two backplanes must always be in synchronization, but only one source should be turned on to a backplane at a time. The drivers are bipolar for speed of operation and, even though operation would be synchronous, phase delays due to different paths would cause opposing drive polarity overlaps.

A TDM CLOCK signal terminal 181 and a TDM SYNC signal terminal 182 are connected to redundancy board 37 by two control lines 42. Terminal 181 receives a BP TDM CLK signal from a terminal 183, connected to the backplane of electronic system 10, through a hysteresis amplifier 184. Terminal 182 receives a BP TDM SYNC signal from a terminal 185, connected to the backplane of electronics system 10, through a hysteresis amplifier 186. Amplifiers 184 and 186 are activated by a PRIME* signal from NAND gate 92. Conversely, signals on terminal 181 are connected to terminal 183 through a hysteresis amplifier 187 and signals on terminal 182 are connected to terminal 185 by a hysteresis amplifier 188. Amplifiers 187 and 188 are activated by a signal from a two input NAND gate 189, one input of which receives the REDUNDANT signal from NAND gate 95 and the other input of which receives an EN RCV CLKS signal from control and status register 60.

Each backplane can send a signalling bit to the other backplane. The bits are generated and read by control register B 70 in redundancy board 22, for example. One of the control lines 42 is used in each direction so they may be set independent of each other. The prime side of course can always signal the redundant side by writing data directly to some address on the redundant backplane during normal redundancy operation. The redundant side can signal the prime side directly only through the signalling bit. If more extensive communications were required from the redundant to prime sides, some other path would be required.

A pair of terminals 190 and 191 are connected to similar terminals in redundancy board 37 by means of two of control lines 42. Terminal 190 is adapted to send a signalling bit from the prime side to the redundant side and terminal 191 is adapted to send a signalling bit from the redundant side to the prime side. Terminal 190 receives a GEN SIGNAL from the upper portion of control register B 70 of electronic system 10 through a hysteresis amplifier 192 when amplifier 192 is activated by a PRIME* signal from NAND gate 92. Terminal 191 receives the GEN SIGNAL signal through a hysteresis amplifier 193 when amplifier 193 is activated by a REDUNDANT signal from NAND gate 95. Conversely, a RCV SIGNAL signal is supplied to the lower portion of control register B 70 from terminal 190 through a hysteresis amplifier 194 when amplifier 194 is activated by a REDUNDANT signal from NAND gate 95, or a RCV SIGNAL is supplied to the lower portion of control register B 70 by terminal 191 through a hysteresis amplifier 195 when amplifier 195 is activated by a PRIME* signal from NAND gate 92.

Thus, apparatus and a method for providing realtime redundant operation in an electronic system has been illustrated and disclosed. The novel apparatus is constructed to provide all of the advantages of a tightly coupled and a loosely coupled system without any of the disadvantages. For example, data backup is in realtime, there is no processor overhead, the cost to nonredundant users is small, the increased faults due to the redundancy are low, online monitoring is good and offline testing is good to excellent. There is no loss of data when the prime and redundant systems are switched and there is no loss of time or other functions. Also, there are no inherent weaknesses. Thus, extremely high reliability can be maintained without substantially raising the cost of the system.

While we have shown and described specific embodiments of the present invention, further modifications and improvements will occur to those skilled in the art. We desire it to be understood, therefore, that this invention is not limited to the particular forms shown and we intend in the append claims to cover all modifications that do not depart from the spirit and scope of this invention.

## Claims

1. An apparatus for providing real time redundant operation of the type wherein there is provided a first electronic system having time shared data and address buses and a memory for data and operations, characterized by:

a second electronic system having time shared data and address buses and a memory for data and operations;

coupling means for coupling the first and second electronic systems together so that the data and address buses carry the same information;

control means coupled to said first and second electronic systems for controlling said first and second electronic systems so that one of said first and second electronic systems operates in a prime mode and the other operates in a redundant mode and so that both memories receive and store approximately the same information; and

said control means switching the mode of operation of the first and second electronic systems when a fault occurs in the electronic system operating in the prime mode.

2. Apparatus as claimed in claim 1 wherein the first and second electronic systems are substantially identical.

3. An electronic system for providing realtime redundant operation characterized by:

a first backplane including a plurality of slots for receiving a plurality of electronic boards and at least a data and address bus connecting the plurality of slots;

a first plurality of electronic boards, including a first redundancy board, engaged in the plurality of slots of said first backplane, each of said first plurality of electronic boards providing a predetermined function and at least one of said first plurality of electronic boards providing a memory for data and operations of the remaining plurality of boards;

a second backplane including a plurality of slots for receiving a plurality of electronic boards and at least a data and address bus connecting the plurality of slots;

a second plurality of electronic boards, including a second redundancy board, engaged in the plurality of slots of said second backplane, said second plurality of electronic boards providing predetermined functions similar to at least some of the predetermined functions of said first plurality of electronic boards and at least one of said second plurality of electronic boards providing a memory for the data and operations stored in

9

the at least one of said first plurality of electronic boards providing a memory;

coupling means connected to said first and second redundancy boards for coupling the data and address buses of said first and second backplanes through said first and second redundancy boards and for coupling control signals to each of said first and second redundancy boards; and

said first and second redundancy boards cooperating to control one of said first and second backplanes and the engaged first and second plurality of electronic boards, respectively, to operate in a prime mode and the other to operate in a redundant mode, and to switch the modes of operation in response to one of a user command and a fault occurrence in the one operating in a prime mode.

4. Apparatus as claimed in claim 3 wherein the first backplane and redundancy board are substantially identical with the second backplane and redundancy board.

5. Apparatus as claimed in claim 3 wherein the electronic system is a paging system and at least one electronic board in each of the first and second pluralities of electronic boards includes a microprocessor and an interconnected I/O management section.

6. Apparatus as claimed in claim 5 wherein the I/O management sections of the one electronic board in each of the first and second pluralities of electronic boards are connected to external communications lines by a multiplexor.

7. Apparatus as claimed in claim 3 wherein each of the first and second redundancy boards is separately powered and the first and second redundancy boards are constructed to provide the associated backplane and remainder of engaged electronic boards with an independent mode of operation when one of power is removed and the redundancy board is disengaged from the associated backplane.

8. Apparatus as claimed in claim 3 wherein the first and second redundancy boards each include buffers in the coupling of the data and address buses to prevent direct coupling of the data and address buses.

9. An electronic paging system with realtime redundant operation characterized by:

a first backplane including a plurality of slots for receiving a plurality of electronic boards and at least a data and address bus connecting the plurality of slots;

a first plurality of electronic boards, including a general memory section, at least one I/O board including a microprocessor and an interconnected I/O management section, and a first redundancy board including buffers, engaged in the plurality of slots of said first backplane for timesharing said data and address bus and said memory section;

a second backplane, substantially similar to said first backplane, including a plurality of slots for receiving a plurality of electronic boards and at least a data and address bus connecting the plurality of slots;

a second plurality of electronic boards, substantially similar to said first plurality of electronic boards, including a general memory section, at least one I/O board including a microprocessor and an interconnected I/O management section, and a second redundancy board including buffers, engaged in the plurality of slots of said second backplane for timesharing said data and address bus and said memory section;

coupling means connected to said first and second redundancy boards for coupling the data and address buses of said first and second backplanes through the buffers of said first and second redundancy boards and for coupling control signals to each of said first and second redundancy boards; and

said first and second redundancy boards cooperating to control one of said first and second backplanes and the engaged first and second plurality of electronic boards, respectively, to operate in a prime mode and the other to operate in a redundant mode, and to switch the modes of operation in response to one of a user command and a fault occurrence in the one operating in a prime mode.

10. An electronic paging system with realtime redundant operation as claimed in claim 9 including in addition a multiplexor coupling the I/O boards to external lines.

11. A method of providing real time redundant operation in a first electronic system having time shared data and address buses and a memory for data and operations, characterized by:

providing a second electronic system having time shared data and address buses and a memory for data and operations;

coupling the first and second electronic systems together so that the data and address buses carry the same information;

controlling the first and second electronic systems so that one operates in a prime mode and the other operates in a redundant mode and so that both memories receive and store the same information; and

switching the mode of operation of the first and second electronic systems when a fault occurs in the electronic system operating in the prime mode.

*FIG.1*

FIG.2

FIG.3A

FIG.3B

EP 0 400 930 A2

FIG.3C

*FIG.3D*

EN_REDUNDANT  SHT.3

PRIME*  SHT.3

OPERATIONAL  SHT.3

REDUNDANT*  SHT.3

74LS240MP

74LS240MP

74LS00MP

74LS00MP

74LS240MP

PRIME

OPERATIONAL

+5V

+5V

EP 0 400 930 A2

*FIG.3E*

FIG.4A

EP 0 400 930 A2

TCF6000M

DRIVE BP
SHT.1

PRIME*

BACKPLANE

CABLING

/A8    18  B0   GBA  GAB  A0  2   A8
/A9    17  B1            A1  3   A9
/A10   16  B2            A2  4   A10
/A11   15  B3            A3  5   A11
/A12   14  B4            A4  6   A12
/A13   13  B5            A5  7   A13
/A14   12  B6            A6  8   A14
/A15   11  B7            A7  9   A15

/A15
/A14
/A13
/A12
/A11

74LS620

*FIG.4B*

EP 0 400 930 A2

TCF6000M

DRIVE_BP
SHT.1

PRIME*

BACKPLANE

| | | |
|---|---|---|
| /A16 | 18 | B0 |
| /A17 | 17 | B1 |
| /A18 | 16 | B2 |
| /A19 | 15 | B3 |
| /A20 | 14 | B4 |
| /A21 | 13 | B5 |
| /A22 | 12 | B6 |
| /A23 | 11 | B7 |

GBA  GAB

74LS620

A0 2
A1 3
A2 4
A3 5
A4 6
A5 7
A6 8
A7 9

CABLING

A16
A17
A18
A19
A20
A21
A22
A23

ADDRESSES
SHT.1

*FIG.4C*

## FIG.4D

P1-B1,B8,B10,B12,B14
B16,B18,B20,B22
B24,B27,&B32
!!! ONE OF THESE PINS
SHOULD BE ISOLATED
FROM THE OTHERS AND
USED FOR CARD
INSERTION DETECTION !!!

MAKE FIRST 5 VOLTS
P1-A1 & A32

HOTCARR_DIO

▷+5V

+

-?∿1/SQUARE INCH

P1-A3,B7,B9,B11,
B13,B15,B17,B19,
B21,A22,C22,B23,B25

MAKE FIRST GROUND
P1-C1 & C32

*FIG.5*

FIG.5B

FIG.5C

TCF6000M

P6-7
DISABLE
ACQUIRE
CONTACTS IN
220

+5V

ACQUIRE_RELAY
SHT.1

4N27

+5V 10K

ACQUIRE_RELAY
SHT.1

MC1472MP

TCF6000M

P6-7
EXTERNAL
RELAY DRIVE

TCF6000M

DISABLE REMOTE
SHT.1

+5V

EN_1 CL_RELAY
SHT.1

MC1472MP

+5V

P6-7
DISABLE
ACQUIRE
CONTACTS OUT

P7-3

P7-5

COMMON    NO    P7-6

NO    P7-2

P2-P5
REDUNDANCY
GROUD
CONNECTIONS

+5V    C1

C2

RELAY.C

EP 0 400 930 A2